# EUROPEAN PATENT APPLICATION

(11) **EP 1 820 756 A1**
(43) Date of publication of application: **22.08.2007**
(21) Application number: 07102598.5
(22) Date of filing: 16.02.2007
(51) Int. Cl.: B65G 21/18, B65G 23/06, B65G 47/51

(54) **Chain conveyor**

(30) Priority: 17.02.2006 IT BO20060120
(71) Applicant: G.D SOCIETÀ PER AZIONI, 40133 Bologna (IT)
(72) Inventor: FERRARI, Michele, 40132, BOLOGNA (IT); NEGRINI, Stefano, 40012, CALDERARA DI RENO (IT)
(74) Representative: Jorio, Paolo

(57) **Abstract**

A chain conveyor having an endless conveyor belt (6), which is formed by joining a number of hinged links (34) and has a conveying surface (7); and at least one pulley (23), which rotates about an axis of rotation (19; 21), and about which the conveyor belt (6) winds on-edge, with a lateral surface (35) of the conveyor belt perpendicular to the conveying surface (7) and contacting a lateral surface (36) of the pulley (23); the lateral surface (36) of the pulley (23) is shaped so that contact between the lateral surface (36) of the pulley (23) and the lateral surface (35) of the conveyor belt (6) occurs at a contact point (37) substantially aligned with a line of action (38) of the pull forces of the conveyor belt (6).

## Description

The present invention relates to a chain conveyor.

The present invention may be used to advantage in a variable-capacity cigarette store, to which the following description refers purely by way of example.

In cigarette packing, a variable-capacity cigarette store is interposed between a cigarette manufacturing machine and a packing machine to compensate for any difference between the number of cigarettes produced and the number of cigarettes packed.

Some examples of FIFO (First In First Out) variable-capacity cigarette stores are described in Patent EP738478B1, Patent US5413213, Patent Application WO9944446A1, and Patent Application WO03026988A1. A store of the type described in the above documents comprises an input station and an output station arranged in series along the path travelled by the cigarettes; an endless chain conveyor having a conveying branch and a return branch; and an adjusting device for adjusting the lengths of the conveying and return branches in complementary manner. The chain conveyor is formed by joining a number of hinged conveying members, and, along the conveying branch, winds on-edge about a fixed drum and a movable drum to form a vertical coil having a number of turns.

In cigarette stores of the type described above, the chain conveyor has been found to be subject to relatively frequent breakage, which, though cheap and easy to repair, by simply replacing the broken conveying member, has serious consequences, by resulting in fallout of a large number of cigarettes from the store and, consequently, in relatively prolonged stoppage of the cigarette manufacturing system, and normally also in damage to a significant number of cigarettes in the store.

It is an object of the present invention to provide a chain conveyor designed to eliminate the above drawbacks, and which, in particular, is cheap and easy to implement.

According to the present invention, there is provided a chain conveyor as claimed in the accompanying Claims.

A non-limiting embodiment of the present invention will be described by way of example with reference to the accompanying drawings, in which:
Figure 1 shows a schematic view in perspective of a variable-capacity store featuring a chain conveyor in accordance with the present invention;
Figure 2 shows a view in perspective, with parts removed for clarity, of the Figure 1 store;
Figure 3 shows a larger-scale plan view of a detail of the Figure 1 store;
Figure 4 shows a larger-scale front section of the Figure 1 store;
Figure 5 shows a larger-scale view of a detail in Figure 4.

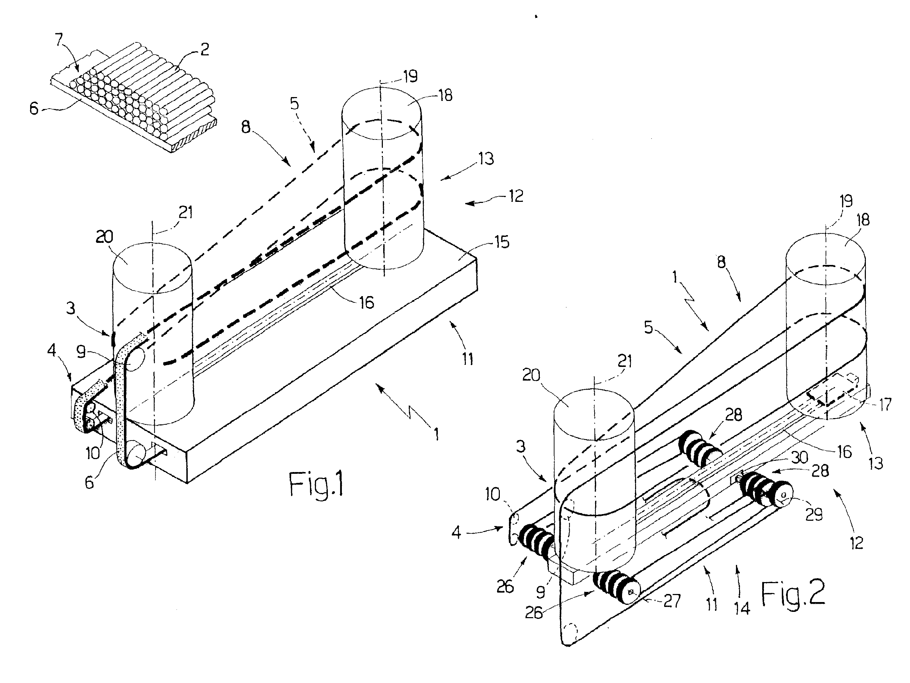

Number 1 in Figure 1 indicates as a whole a variable-capacity store for cigarettes 2, comprising an input station 3 and an output station 4 for cigarettes 2. Input station 3 and output station 4 are arranged in series along the path travelled by cigarettes 2. More specifically, store 1 is a FIFO variable-capacity cigarette store, i.e. stores a variable number of cigarettes 2, and in which the first cigarettes 2 entering store 1 through input station 3 are the first supplied to output station 4.

Store 1 is supplied - by an input conveyor (not shown) located at input station 3 and connected to the output of a manufacturing machine (not shown) - with a mass of cigarettes 2 arranged in bulk in a continuous stream, and feeds cigarettes 2 to an output conveyor (not shown) located at output station 4 and connected to the input of a packing machine (not shown).

Store 1 comprises a chain conveyor 5 having an endless conveyor belt 6, in turn having a conveying surface 7 for supporting cigarettes 2 as they travel through store 1. Chain conveyor 5 comprises a conveying branch 8, which, together with the input and output conveyors, defines the path of cigarettes 2 between the manufacturing and packing machines, extends from an input pulley 9 at input station 3 to an output pulley 10 at output station 4, and provides for conveying cigarettes 2 from input station 3 to output station 4. Chain conveyor 5 also comprises a return branch 11 extending from output pulley 10 to input pulley 9.

Store 1 comprises an adjusting unit 12 for adjusting the length of conveying branch 8 and the length of return branch 11 in complementary manner to adjust the storage capacity of store 1, and which comprises an adjusting device 13 associated with conveying branch 8, and a compensating device 14 associated with return branch 11.

Adjusting device 13 comprises a fixed frame defined by a parallelepiped-shaped box body 15, the top surface of which has a straight rail 16, which extends between input station 3 and output station 4 and is fitted with a slide 17 supporting a movable drum 18 with a vertical axis 19. Straight rail 16 also supports a fixed drum 20, which is connected rigidly to straight rail 16, has a vertical axis 21, and is located close to input station 3.

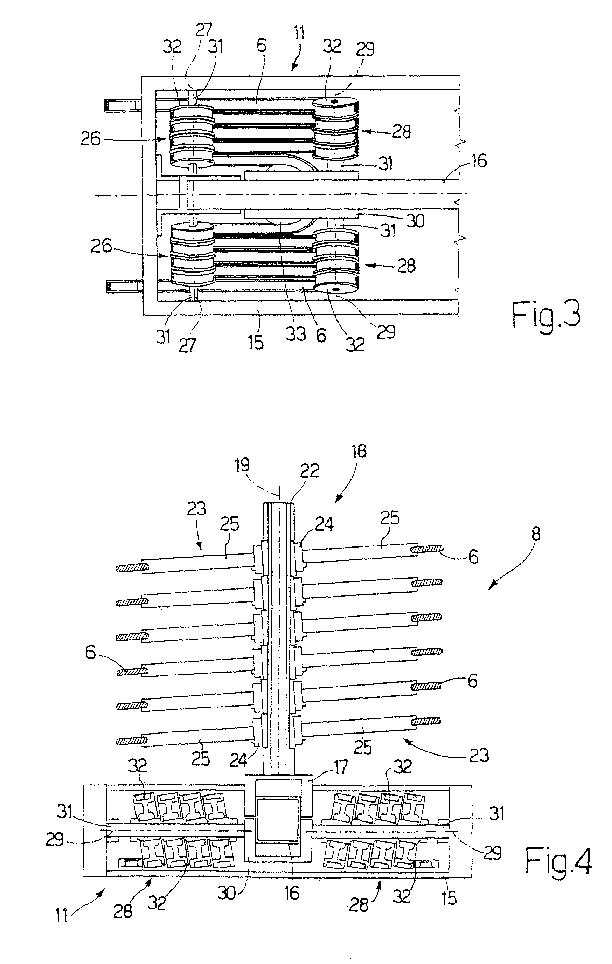

As shown in Figure 4, each drum 18, 20 comprises a vertical, angularly fixed, central shaft 22 fitted with equally spaced pulleys 23; and each pulley 23 comprises a central hub 24 fitted idly and in an axially fixed position to shaft 22, and an outer rim 25 coaxial with shaft 22 and relative hub 24 and for supporting chain conveyor 5.

Compensating device 14 is housed entirely inside box body 15, underneath adjusting device 13. More specifically, as shown in Figure 2, compensating device 14 comprises a pair of fixed drums 26, which are coaxial, have respective horizontal axes 27, and are connected rigidly to rail 16 at fixed drum 20. Compensating device 14 also comprises a pair of movable drums 28, which are coaxial, have respective horizontal axes 29, and are fitted to a slide 30 running along a bottom portion of rail 16. More specifically, straight rail 16 is defined by a square box section (shown more clearly in Figure 4), a top portion of which supports drum 20 and, by means of slide 17, drum 18, and a bottom portion of which supports fixed drums 26 in a fixed position and, by means of slide 30, movable drums 28.

As shown in Figures 3 and 4, drums 26 and 28 are located on opposite sides of rail 16, with respective axes 27 and 29 perpendicular to rail 16; and each drum 26, 28 comprises a respective shaft 31, and a number of pulleys 32, which are equally spaced along shaft 31, are fitted idly to shaft 31, and have respective outer grooves of a width approximately equal to but no smaller than the width of chain conveyor 5. In addition to the two movable drums 28, slide 30 supports a pulley 33 mounted idly astride rail 16 to rotate freely about a vertical axis, and which allows chain conveyor 5 to pass from the movable drum 28 on one side of rail 16 to the movable drum 28 on the other side of rail 16. More specifically, passage of chain conveyor 5 from the movable drum 28 on one side of rail 16 to the movable drum 28 on the other side of rail 16 is made possible by chain conveyor 5 winding on-edge about pulley 33.

Along conveying branch 8, chain conveyor 5 winds downwards about the two drums 18 and 20 to form a vertical coil having a number of turns, each of which is supported by two corresponding pulleys 23. Along conveying branch 8, chain conveyor 5 is positioned with conveying surface 7 facing upwards, and, along the coil, is positioned on-edge with respect to drums 18 and 20, and rests flat on rims 25 of pulleys 23. Along return branch 11, chain conveyor 5 winds about drums 26 and 28 to form a horizontal coil having a number of turns, each of which is supported by two corresponding pulleys 32.

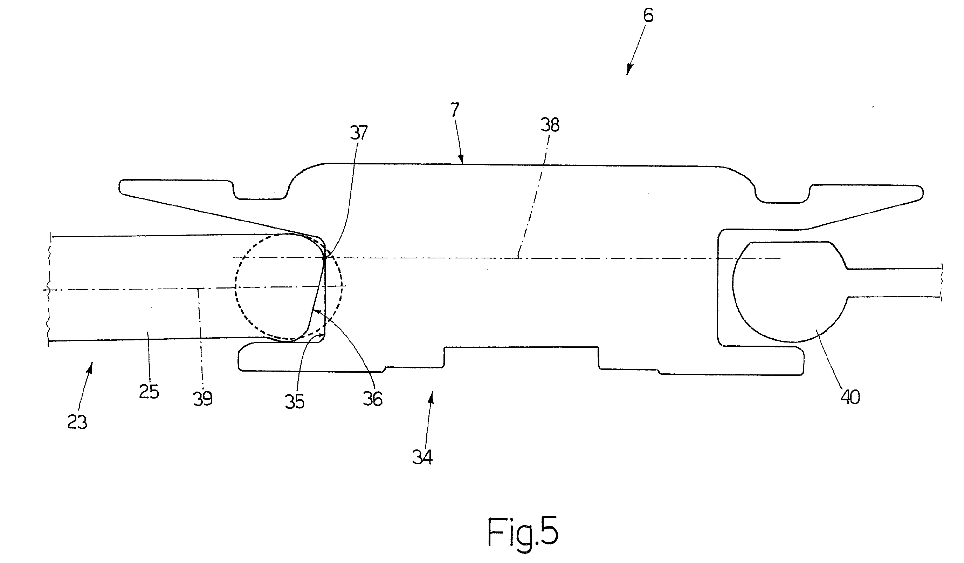

As shown in Figure 5, conveyor belt 6 is formed by joining a number of links 34 (only one shown in Figure 5) hinged to one another to rotate with respect to one another about an axis of rotation perpendicular to conveying surface 7. By way of example, each link 34 may be of the type described in Patent US 4893709. Conveyor belt 6 has two opposite, facing, lateral surfaces 35 perpendicular to conveying surface 7. More specifically, each lateral surface 35 of conveyor belt 6 is C-shaped, so as to enclose each pulley 23 and also be guided vertically.

As stated, conveyor belt 6 winds on-edge about each pulley 23, with a lateral surface 35 perpendicular to conveying surface 7 and contacting a lateral surface 36 of pulley 23. Lateral surface 36 of pulley 23 is shaped so that contact between lateral surface 36 of pulley 23 and lateral surface 35 of conveyor belt 6 occurs at a contact point 37 aligned with a line of action 38 of the pull forces of conveyor belt 6. In other words, contact point 37 represents the tip of a cusp of lateral surface 36 of pulley 23, so that contact between lateral surface 36 of pulley 23 and lateral surface 35 of conveyor belt 6 is stable and only occurs at contact point 37.

Lateral surface 36 of pulley 23 is asymmetrical in shape with respect to a centreline 39 perpendicular to axis of rotation 19, 21, so that contact point 37 is located at a distance from centreline 39 towards conveying surface 7, and therefore in an intermediate position between centreline 39 and conveying surface 7. In other words, lateral surface 36 of pulley 23 has a maximum diameter (corresponding to the position of contact point 37) at a distance from centreline 39 towards conveying surface 7.

When contact point 37 is aligned with the line of action 38 of the pull forces of conveyor belt 6, the pull forces of conveyor belt 6 and the centrifugal force acting on conveyor belt 6 are aligned and generate no twisting torque. Conversely, when contact point 37 is not aligned with the line of action 38 of the pull forces of conveyor belt 6, the pull forces of conveyor belt 6 and the centrifugal force acting on conveyor belt 6 are not aligned and so generate a twisting torque, which tends to push conveyor belt 6 vertically against pulley 23, thus greatly increasing the friction forces between lateral surface 36 of pulley 23 and lateral surface 35 of conveyor belt 6. The increase in the friction forces between lateral surface 36 of pulley 23 and lateral surface 35 of conveyor belt 6 tends to increase wear, and so reduce the working life, of conveyor belt 6.

In a preferred embodiment, fixed spherical guides 40 are located about each pulley 23, and engage the lateral surface 35 opposite the lateral surface 35 engaged by pulley 23.

Tests show chain conveyor 5 as described above to have a low breakage rate, even when used over a very long period of time, and which is achieved by greatly reducing the friction forces on conveyor belt 6 at pulleys 23. Tests also show the friction forces on conveyor belt 6 at pulleys 23 to be at least halved as compared with conventional design solutions.

Needless to say, chain conveyor 5 as described above may be used for conveying other than cigarettes 2 and/or in a device other than store 1. For example, chain conveyor 5 as described above may be used for conveying filter portions, packets of cigarettes, confectionary, or semifinished parts of the manufacturing or metalworking industry.

## Claims

1. A chain conveyor comprising:
an endless conveyor belt (6) having a conveying surface (7); and
at least one pulley (23), which rotates about an axis of rotation (19; 21), and about which the conveyor belt (6) winds on-edge, with a lateral surface (35) of the conveyor belt perpendicular to the conveying surface (7) and contacting a lateral surface (36) of the pulley (23);
the chain conveyor (5) being **characterized in that** the lateral surface (36) of the pulley (23) is shaped so that contact between the lateral surface (36) of the pulley (23) and the lateral surface (35) of the conveyor belt (6) occurs at a contact point (37) aligned with a line of action (38) of the pull forces of the conveyor belt (6).

2. A chain conveyor as claimed in Claim 1, wherein the lateral surface (35) of the conveyor belt (6) is C-shaped, so as to enclose the pulley (23) and also be guided vertically.

3. A chain conveyor as claimed in Claim 1 or 2, wherein the contact point (37) represents the tip of a cusp of the lateral surface (36) of the pulley (23).

4. A chain conveyor as claimed in Claim 1, 2 or 3, wherein the lateral surface (36) of the pulley (23) is asymmetrical in shape with respect to a centreline (39) perpendicular to the axis of rotation (19; 21), so that the contact point (37) is located at a distance from the centreline (39) towards the conveying surface (7).

5. A chain conveyor as claimed in one of Claims 1 to 4, wherein the conveyor belt (6) is formed by joining a number of links (34) hinged to one another to rotate with respect to one another about an axis of rotation perpendicular to the conveying surface (7).

6. A chain conveyor as claimed in one of Claims 1 to 5, wherein the conveyor belt (6) has two opposite, facing, lateral surfaces (35) perpendicular to the conveying surface (7); each lateral surface (35) of the conveyor belt (6) is C-shaped; and fixed spherical guides (40) are located about the pulley (23), and engage the lateral surface (35) of the conveyor belt (6) opposite the lateral surface (35) of the conveyor belt engaged by the pulley (23).

7. A chain conveyor as claimed in one of Claims 1 to 6, wherein the chain conveyor (5) comprises a conveying branch (8) extending between an input station (3) and an output station (4); and a return branch (11) extending between the output station (4) and the input station (3); and adjusting means (12) are provided to adjust the lengths of the conveying branch (8) and the return branch (11) in complementary manner.

8. A chain conveyor as claimed in Claim 7, wherein the conveying branch (8) forms at least one first coil about at least one pair of first drums (18, 20), each of which has a number of said pulleys (23).

9. A chain conveyor as claimed in Claim 8, wherein each first drum (18, 20) comprises a vertical, angularly fixed, central shaft (22), on which the pulleys (23) are equally spaced.

10. A chain conveyor as claimed in Claim 9, wherein each pulley (23) comprises a central hub (24) fitted idly and in an axially fixed position to the shaft (22); and an outer rim (25) coaxial with the shaft (22) and the relative hub (24), and which supports the chain conveyor (5).

11. A chain conveyor as claimed in Claim 8, 9 or 10, wherein the return branch (11) forms at least one second coil about at least one pair of second drums (26, 28) perpendicular to the first drums (18, 20).

12. A variable-capacity store comprising the chain conveyor (5) as claimed in Claims 1 to 11.
